# EUROPEAN PATENT APPLICATION

(11) **EP 2 283 996 A1**
(43) Date of publication of application: **16.02.2011**
(21) Application number: 09010466.2
(22) Date of filing: 13.08.2009
(51) Int. Cl.: B29C 70/54, B29C 31/08, F03D 1/06

(54) **Method and arrangement to produce a wind-turbine-blade**

(71) Applicant: SIEMENS AKTIENGESELLSCHAFT, 80333 München (DE)
(72) Inventor: Stiesdal, Henrik, 5000 Odense C (DK)

(57) **Abstract**

According to the method to produce a wind-turbine-blade (BL) a bottom layer (BA) is laid down into a forming tool. The bottom layer (BA) is used as a basis of a pile (PI). A predefined number of additional layers is stacked vertically on top of the basis to form the pile (PI), while the pile (PI) is used as a separate module for the production of the blade. The bottom layer (BA) is made of a nearly airtight material, to prevent that surrounding air is allowed to flow vertically through the pile (PI). An extraction of air is applied by a machine to a topmost layer of the pile in a way that the pile is sucked towards the machine. This allows to lift up the pile and to bring it into a mould for the further production of the blade.

## Description

The invention relates to a method and arrangement to produce a wind-turbine-blade.

Wind turbine blades are usually made using a matrix of fiber glass mats. The building up of the matrix is characterized by a considerably amount of manual layup work where fiber mats with fibers of different orientation are put on top of each other in order to build up the strength and stiffness of the blade. The manual layup work is difficult and time-expensive.

It is known to use fiber reinforced laminates, balsa-wood and fiber-mats to build up a blade in a sandwich-design. A lower mould is used to carry various sheets of the laminates, fiber-mats and of balsa-wood to form a 3D-blade-structure.

If the blade structure is completed an upper mould may be placed on top of the structure. It is connected with the lower mould to enclose the whole structure. By help of a VARTM-process a resin or any other suitable liquid thermoplastic is injected into the moulds to complete the blade.

The fiber-mats are used as fiber reinforcements of the structure and may comprise for example chop stand or woven fabric mats, multi-axis interlaid scrims, warp-thread reinforced unidirectional performs, single or joined roving bundles. They may consist of any known material, such as glass, Kevlar, carbon or even hemp.

At certain positions of the blade there is the need to pile up a number of fiber-mats one upon the other to improve the blade-structure there for stability purposes. This is done manually and mainly by hand, so a lot of time is needed to stack the fiber-mats.

The structural characteristics of a fiber reinforced laminate are usually governed by the amount, type and orientation of the reinforcement fibers. Typically, the stiffness and strength of fibers can only be taken into account to the extent that loading occurs in the longitudinal fiber direction.

Therefore a traditionally design assumes that the fibers of the finished laminate will be oriented in the same direction as the direction of the fibers when placed in a forming tool. The forming tool might be a mould for a wind turbine blade. The mould might be used later within a "vacuum assisted resin transfer method", VARTM, to manufacture the blade.

However in many cases wrinkles in the fiber layers may occur. This results from the manufacturing process and the characteristics of the fiber mats and the used fabrics.

Wrinkles are developed because of the manual layup work and due to the woven characteristics or the interconnection of the fibers in the non woven fabrics. Highly skilled and experienced layup workers are therefore needed to prevent wrinkles during the difficult layup work.

Wrinkles leads to the fact that the fibers do not show the desired alignment or orientation, they show a more or less bended shape. The wrinkles stay inside the structure and are fixed by the infused resin of the VARTM later.

The wrinkles are weakening the whole structure, a severe overload of the laminate or the whole structure may be the result. The wrinkles result in a loss of stiffness and/or in a loss of the strength of the produced structure. This loss will often exceed any realistic safety margins of the structure.

If the wrinkles are positioned nearby the surface of the produced structure it might be possible to repair them. This needs to be done by hand in a time-expensive work.

Otherwise the whole structure needs to be rejected, which is a significant loss of money and time.

It is therefore the aim of the invention, to provide an improved method to produce a wind-turbine-blade quick and in a high quality in regard to wrinkles. It is also an aim of the invention to provide an arrangement, used within this inventive method.

These aims are solved by the features of claim 1 and by the features of claim 11.

Improved embodiments of the invention are object of the dependant claims.

According to the inventive method to produce a wind-turbine-blade a bottom layer is laid down into a forming tool. The bottom layer is used as a basis of a pile. A predefined number of additional layers is stacked vertically on top of the basis to form the pile, while the pile is used as a separate module for the production of the blade. The bottom layer is made of a nearly airtight material, to prevent that surrounding air is allowed to flow vertically through the pile. An extraction of air is applied by a machine to a topmost layer of the pile in a way that the pile is sucked towards the machine. This allows to lift up the pile and to bring it into a mould for the further production of the blade.

The mould may be used later within a VART-process as described above to manufacture the blade.

The module contains in a most simple embodiment only a single layer of fiber material and the bottom layer as basis. By use of a technical vacuum the module can be lifted and can be positioned into the mould or into another carrier for the further use.

It is also possible to combine the single layer and the basis - for example a single layer of fiber material, which is made by a pre-impregnated material showing a nearly airtight characteristic.

The invention allows to speed up the blade-production process as prepared piles can be brought as components inside the mould for a wind turbine blade. This also allows to produce the components or modules of the blade in advance. So production time can be reduced, as the expensive blade-moulds can be used quicker and in a more effective manner.

The inventive method also reduces the amount of manual layup work, where large and heavy fiber-mats need to be laid up and positioned to the forming tool. Now it is now possible to layup at a position one or more bundles of layers at once by using the vacuum lifting. This way, the invention improves the working conditions for the layup workers.

The invention improves the quality of the layup work as it is now possible to use a machine to lift and position layers of fibers precisely. So wrinkles can be avoided. This results in a stronger and more consistent blade structure.

The forming tool can be a mould or in its simplest form a lay-up table or a bench.

The forming tool can be designed for a suction side or for a pressure side of the blade of the wind turbine.

The forming tool comprises the completed layers for the blade structure. In a preferred embodiment the production setup is located within the operating radius of the vacuum lifting machine used according to the invention.

In a further embodiment the forming tool is arranged for building up a part of a wind turbine blade, where a carrier is positioned at the bottom of the forming tool.

At least one layer of unconnected unidirectional roving-bundles of a fiber-material are laid-out on top of the carrier. The roving-bundles are laid out in longitudinal, axial or another predetermined direction.

The invention allows to transport and to move the stacked roving-bundles together with the carrier into a mould, which is used to build-up the blade in a sandwich-assembly.

This a great advantage compared to prior art where single roving bundles hasn't been used in the blade production due to the fact that it is not possible to handle them in a manual layup production.

Furthermore, by using layers of unconnected single roving bundles in the building of the blade it is possible to avoid wrinkles in the layers. This is a big advantage compared to prior art where layers of woven fabrics are used in the manual layup where wrinkles are likely to be formed.

The invention is described in more detail now by help of a figure.
- FIG 1: shows a blade, which is manufactured according to the invention, while
- FIG 2: and FIG 3 show piles according to the invention in more detail.

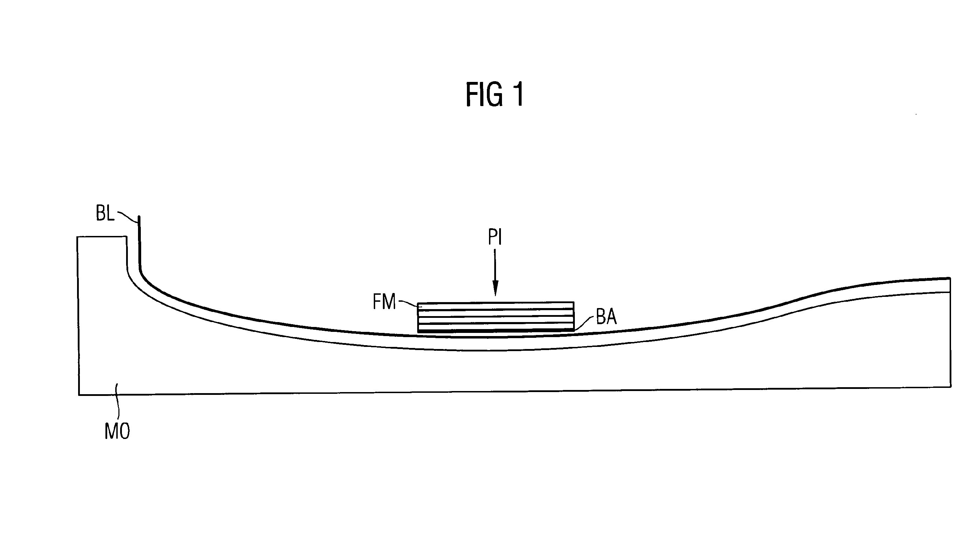

FIG 1 shows a blade BL, which is manufactured according to the invention.

A predefined number of fiber-mats FM are stacked vertically as a pile PI to form a separate module for the blade-production.

A bottom layer of at least nearly airtight material is used as a basis BA for the pile PI. The pile PI is transported as described below into a mould MO, which is used to produce the blade in a sandwich-build-up.

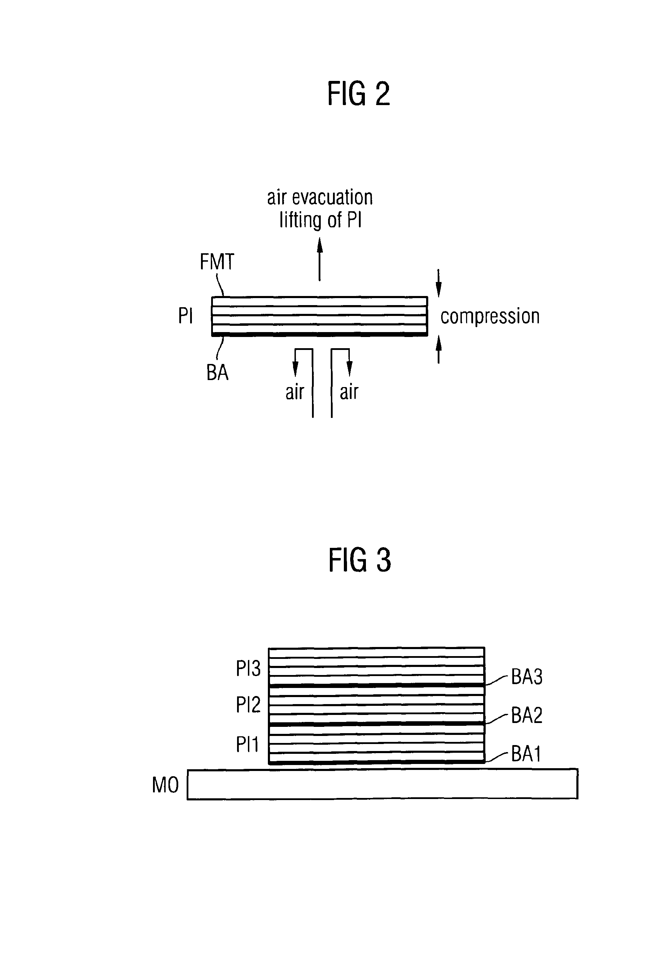

FIG 2 and FIG 3 show piles PI according to the invention in more detail.

To the pile PI an extraction of air is applied to a topmost fiber-mat FMT in a way that the pile PI is compressed vertically as the basis BA blocks surrounding air to flow vertically through the basis BA and through the pile PI.

So it is possible to lift up the pile PI vertically and to transport the pile PI together with its basis BA to be positioned into the mould MO of FIG 1.

It is possible to use uncoated or coated paper as basis BA as this material is nearly airtight. It is also possible to use a plastic foil for this.

Referring now to FIG 3 it is also possible to stack a number of piles PI1, PI2, PI3 vertically to be used for building up of the blade BL of FIG 1, while the piles PI1 up to PI3 are separated by its basis BA1, BA2, BA3.

The basis BA1 of a first pile PI1 is destined to be located nearby the surface of the mould MO, so it is possible to use paper or plastic foil as basis BA1.

If plastic foil is used the foil has to be removed afterwards, as it does not bond with the resin, which is applied afterwards to the blade during the VARTM-process.

A second pile PI2, which is put on top of the first pile PI1, uses paper as its basis BA2. Paper bonds with the resin, so it is possible for the paper to stay inside the stacked piles.

## Claims

1. Method to produce a wind-turbine-blade,
- where a bottom layer is laid down into a forming tool, while the bottom layer is used as a basis of a pile,
- where a predefined number of additional layers is stacked vertically on top of the basis to form the pile, while the pile is used as a separate module for the production of the blade,
- where the bottom layer is made of a nearly airtight material, to prevent that surrounding air is allowed to flow vertically through the pile,
- where an extraction of air is applied by a machine to a topmost layer of the pile in a way, that the pile is sucked towards the machine, to allow the pile to be lifted up and to be brought into a mould for the further production of the blade.

2. Method according to claim 1, where the layers comprises fiber-mats or plies of fiber-woven fabrics or plies of nonwoven fabrics or roving bundles or partially impregnated fibers or pre-impregnated layers of fiber or balsa wood or foam.

3. Method according to claim 1 or 2, where the layers are prefabricated in their size before they are piled.

4. Method according to one of the claims 1 to 3,
- where uncoated or coated paper is used as airtight or nearly airtight material, or
- where a plastic-foil is used as airtight or nearly airtight material, or
- where a pre-impregnated layer of fiber material is used as airtight or nearly airtight material.

5. Method according to claim 1, where the extraction of air results in a technical vacuum inside the pile.

6. Method according to one of the claims 1 to 5, where the pile is compressed mechanically before the air-extraction is applied, to avoid a horizontally intrusion of surrounding air into the pile.

7. Method according to one of the claims 1 to 6, where a number of piles are stacked vertically in the forming tool, while the piles are separated by their dedicated basis.

8. Method according to claim 7, where a first pile, whose basis is destined to be located nearby the surface of the mould, uses paper or a plastic foil as bottom layer.

9. Method according to claim 8, where a second pile, which is put on top of the first pile, uses paper as its bottom layer.

10. Method according to one of the claims 1 to 9, where the pile is embraced by paper, so the paper is used as bottom layer and is also used as a box for the whole pile.

11. Arrangement to be used during the method according to one of the claims 1 to 10,
- with a forming tool, which is used to carry a bottom layer laid down into the forming tool, while the bottom layer is used as a basis of a pile,
- where the pile comprises the bottom layer and a predefined number of additional layers, while the additional layers are stacked vertically on top of the basis, while the pile is used as a separate module for the production of the blade,
- where the bottom layer is made of a nearly airtight material to prevent that surrounding air is allowed to flow vertically through the pile,
- where a machine is located nearby the forming tool and is acting on a topmost layer of the pile, while the machine is constructed to extract air from the pile so the pile is sucked towards the machine to allow the pile to be lifted up and to be brought into a mould for the further production of the blade.

12. Arrangement according to claim 11, where the layers comprises fiber-mats or plies of fiber-woven fabrics or plies of nonwoven fabrics or roving bundles or partially impregnated fibers or pre-impregnated layers of fiber or balsa wood or foam.

13. Arrangement according to claim 11 or 12, where the layers show a prefabricated size before they are piled.

14. Arrangement according to one of the claims 11 to 13,
- where uncoated or coated paper is used as airtight or nearly airtight material, or
- where a plastic-foil is used as airtight or nearly airtight material, or
- where a pre-impregnated layer of fiber material is used as airtight or nearly airtight material.

15. Arrangement according to one of the claims 11 to 14, where the forming tool comprises a number of vertically stacked piles, while the piles are separated by their dedicated basis.

16. Arrangement according to claim 15, where a first pile, whose basis is destined to be located nearby the surface of the mould, is made of paper or plastic foil to be sued as bottom layer.

17. Arrangement according to claim 16, where a second pile, which is put on top of the first pile, comprises paper as its bottom layer.

18. Arrangement according to one of the claims 11 to 17, where the whole pile is embraced by paper, so the paper is used as bottom layer and is also used as a box for the whole pile.
